# EUROPEAN PATENT SPECIFICATION

(11) **EP 3 169 633 B1**
(45) Date of publication and mention of the grant of the patent: **06.07.2022**
(21) Application number: 15756990.6
(22) Date of filing: 14.07.2015
(51) Int. Cl.: C02F 3/08, C02F 1/52, C02F 1/66, C02F 103/10

(54) **METHOD FOR THE TREATMENT OF SULPHATE CONTAINING WASTE WATER**
VERFAHREN ZUR AUFBEREITUNG VON SULFATHALTIGEM ABWASSER
PROCÉDÉ POUR LE TRAITEMENT D'EAUX USÉES CONTENANT DU SULFATE

(30) Priority: 18.07.2014 ZA 201405615
(43) Date of publication of application: 24.05.2017
(73) Proprietor: Water Research Commission, 0084 Pretoria (ZA)
(72) Inventor: JOUBERT, Johannes Hendrikus Brand, 0084 Pretoria (ZA); POCOCK, Gina, 0084 Pretoria (ZA)
(74) Representative: JENSEN & SON
(86) International application number: PCT/IB2015/055316
(87) International publication number: WO 2016/009346

(56) References cited:
- WO-A1-91/16269
- WO-A1-94/29227
- WO-A1-99/06328
- WO-A1-2005/044742
- US-A1- 2002 185 437

## Description

### FIELD OF THE INVENTION

This invention relates to the treatment of wastewater. In particular, the invention relates to a method for the treatment of sulphate containing effluent.

### BACKGROUND OF THE INVENTION

The inventors are aware of four patents in this field as follows:
- US5,587,079 by Rowley et al.
- US6, 197196 by Rose et al.
- US6,203,700 by Rose et al.
- EP 1 124 763 by Rose et al.

However, although some of the components of the present invention are similar to those claimed in the above patents, the process as a whole presents a unique solution to the treatment of acidic, sulphate and metal containing wastewater, such as that which is typical of acid mine drainage. WO99/06328 discloses a method for treating sulphate-containing water comprising a first sulphate reducing reactor (14) followed by a fluidised bed reactor.

### SUMMARY OF THE INVENTION

According to one aspect of the invention, there is provided a process for treating sulphate containing effluent, which includes
reducing sulphate contained in said sulphate containing effluent to sulphide in a biological sulphate reducing reactor, wherein sulphate is reduced to sulphide through sulphate reducing bacteria;
receiving the effluent from the biological sulphate reducing reactor into a two-phase fluidised bed reactor containing limestone particles and low density plastic floating media;
precipitating calcium carbonate from the received effluent on the limestone particles in the two-phase fluidised bed reactor;
aerating the received effluent in the two-phase fluidised bed reactor to remove CO₂ produced in the biological sulphate reducing process, thereby to increase the pH of the received effluent in the two-phase fluidised bed reactor;
producing elemental sulphur on the plastic floating media through biological sulphide oxidation of the received effluent by sulphide oxidizing bacteria on the low density plastic floating media;
recycling, within the fluidised bed reactor, the contents of the fluidised bed reactor at a sufficient rate to effect abrasion, wherein recycling removes elemental sulphur from the plastic floating media;
recycling, within the two-phase fluidised bed reactor, hydroxyl ions produced by the sulphide oxidation process, wherein recycling hydroxyl ions produced by the sulphide oxidation process comprises further increasing the pH of the solution and increasing the pH of the solution comprises enhancing calcium carbonate precipitation, and
harvesting the elemental sulphur from below the low density plastic floating media in a top portion of the two-phase fluidised bed reactor.

The step of reducing sulphate contained in a sulphate containing effluent to sulphide in a biological sulphate reducing reactor may specifically include reducing the sulphate in the biological sulphate reduction process to produce hydrogen sulphide.

The method may include using an added organic carbon source as an electron donor in the biological sulphate reducing reactor, producing bicarbonate and hydrogen sulphide.

The process may include the prior steps of:
receiving a feed water effluent containing sulphate into a neutralisation and metal sulphide-containing reactor in which iron sulphide (FeS) is precipitated;
feeding the precipitated iron sulphide into a biological iron oxidation reactor; and
oxidizing the ferrous metal to ferric metal at a pH of about 2.

The process may include withdrawing effluent from the biological iron oxidation reactor and adding magnesium hydroxide to the effluent to produce solid iron hydroxide and dissolved magnesium sulphate in solution, followed by separation of the solid iron hydroxide.

The process may further include the removal of dissolved magnesium sulphate from the effluent by means of any one of evaporation and eutectic freeze to produce magnesium sulphate crystals.

The process may include the further step of passing the effluent from the two-phase fluidised bed reactor to a manganese precipitation reactor and controlling the pH in the manganese precipitation reactor to about 9.7 to permit precipitation of manganese carbonate and calcium carbonate from the effluent.

The process may include the further step of passing the effluent from the manganese precipitation reactor to a magnesium precipitation reactor and controlling the pH in the magnesium precipitation reactor to above 10.73 to permit precipitation of magnesium hydroxide and calcium carbonate from the effluent.

The process may include the further step of adding carbon dioxide sourced from calcination of the calcium carbonate produced at the two-phase fluidised bed reactor initially.

The process may include the further step of feeding the effluent of the magnesium precipitation reactor to an iron precipitation reactor and adding iron hydroxide to the effluent, permitting further sulphide precipitation as iron sulphide.

The process may include the further step of feeding the effluent from the iron precipitation reactor to a biological effluent treatment process in the form of a trickling filter followed by a reverse osmosis membrane reactor.

The invention will now be described by way of a non-limiting example only, with reference to the following drawing.

### DRAWING

In the drawing:

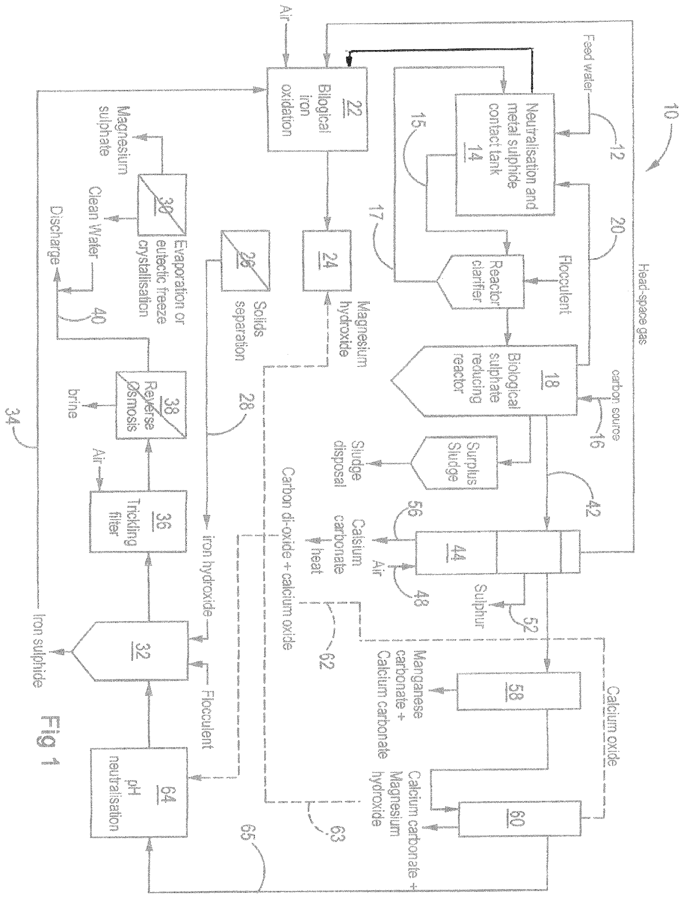

Figure 1 shows a process for treating waste water and a treatment plant in accordance with one example of the invention.

### EMBODIMENT OF THE INVENTION

In Figure 1 the process 10 according to the invention and treatment plant example, the plant not forming part of the invention, is shown in detail. The process 10 is based on biological sulphate reduction (BSR), in which process sulphate is reduced to hydrogen sulphide by sulphate reducing bacteria using an organic carbon source, which also acts as the electron donor, with the simultaneous production of bicarbonate alkalinity.

The water treatment process 10 starts where feed water 11 enters the process through a feed line 12 into a neutralisation and metal sulphide contact tank 14. The feed water 11 is typically mine water, which contains high sulphate concentrations and is acidic in most instances. It further contains iron, manganese and a range of other contaminants, most of which are soluble.

An organic biodegradable carbon source 13 is introduced through a feed line 16, into a biological sulphate reducing (BSR) reactor 18. In the BSR reactor 18 sulphate is reduced to sulphide while the organic material is broken down. The result is that bicarbonate alkalinity (HCO₃) and H₂S are produced and the sulphate concentration is reduced.

The carbon source 13 for the BSR process in the BSR reactor 18 may be sewage sludge, any organic industrial waste source such as abattoir waste or dairy waste, or may be a fermented carbohydrate source such as maize silage. These carbon sources 13 have a high chemical oxygen demand (COD), which may be in the form of soluble or particulate COD. These carbon sources 13 may be used individually or in various combinations depending on availability and location. The BSR reactor design may depend on the carbon source 13 that is intended. When silage is to be the main carbon source, an expanded sludge bed reactor, a stirred reactor, or the Upflow Anaerobic Sludge Blanket (UASB) reactor may be used preferentially, but a fixed media reactor or bio-membrane reactors may be preferred in the case of a soluble COD source. The sulphate reducing bacteria are dependent on the action of heterotrophic hydrolytic bacteria to break down the carbon source 13 into volatile fatty acids, which they use as the carbon source for sulphate reduction.

The hydrolysis step and the sulphate reduction step occur in the same BSR reactor 18. In order to prevent limitation of hydrolysis, the volatile fatty acid concentration is carefully monitored and managed through controlled dosing of the carbon source 13 via 16. The hydrolysis of the carbon source 13 results in the release of ammonia nitrogen, which is used as a nitrogen source for the bacteria. When a high protein carbon source 13 such as sewage sludge or abattoir waste is utilized the ammonia concentration in the effluent leaving the BSR reactor 18 at 42 may be high. The protein content of maize silage is low and the amount of ammonia in the effluent leaving at 42 will be negligible. There will also be residual soluble COD in the effluent of the biological sulphate reducing reactor 18 leaving at 42. A portion of the organic matter from the biological sulphate reducing reactor 18 will need to be wasted periodically. In this example, surplus sludge is removed at 19 and is disposed at 200.

A fraction of the product produced at the BSR reactor 18 is fed from the reactor 18 back to the neutralisation and metal sulphide contact tank 14 via the feed line 20. This step causes the precipitation of metal, and specifically iron sulphide (FeS) (at 15). The iron sulphide precipitated at 15 is recovered into a Reaction clarifier 70, where flocculent 72 is added to enhance the settling process. The settled product of FeS is then fed into a biological Iron oxidation reactor 22 (at 17) to oxidize the iron and to convert the ferrous metal to ferric metal at a pH of about 2. Air 23 is introduced to the biological iron oxidation reactor 22 for this purpose. This process is similar to bioleaching. As indicated by the feedback line 17, a fraction of the settled product of FeS is introduced to the neutralization and metal sulphide contact tank 14 as an aid to enhance the precipitation and clarification process.

From the biological sulphate-reducing reactor 18, the remainder of the effluent is then transferred via 42 to a two-step process reactor 44, in which calcium carbonate and elemental sulphur are removed through aeration. Air 45 is introduced into the two-step process reactor 44 at 48. Sulphides are converted into sulphur in a biological sulphide oxidation process in the reactor 44. The reactor 44 is a two-phase fluidized bed reactor, filled with a floating carrier such as low density plastic media to provide a surface for attachment of bacteria, which forms a bio-film on the surface of the carrier, and fine limestone particles onto which calcium carbonate precipitates. In the biological sulphide oxidation process elemental sulphur 46 is produced extracellularly by the bacteria and the movement of the carrier causes the elemental sulphur 46 to be separated from the bacteria and the elemental sulphur 46 then propagates below the floating media in the two-step process reactor 44, which is recovered at 52.

In the biological sulphide oxidation process hydroxyl ions are also produced which are recycled internally within the two-step process reactor 44 to produce more alkalinity in the reactor 44, which increases the pH to about 8.3 and causes calcium carbonate 47 to precipitate. Calcium carbonate 47 produced in the two-step process reactor 44 is released via at 56 and when heated at 49 to about 900°C produces calcium oxide 57.2 and CO₂ 57.1 at 57. The calcium oxide 57.2 is then hydrated to form calcium hydroxide for further use in the process.

The headspace gas 43.1 of the two-step process reactor 44 containing hydrogen sulphide (H₂S) gas stripped from solution during aeration is transferred to the biological iron oxidation reactor (22) at 43.

The calcium hydroxide 57.3 is introduced to two reactors 58, a manganese removal column, and 60, a magnesium removal column, via 62 to increase the pH to just below 9.7, the point at which manganese precipitates as manganese carbonate 59.1 and in which calcium carbonate 59.2 also precipitates.

At the manganese removal column 58 (also referred to as a manganese precipitation reactor), effluent from the two-step process reactor 44 is received via 50. Further calcium hydroxide (quicklime) can be added (not shown) to the effluent of the two-step process reactor 44 in order to increase the pH further to just below 10.73, the pH required for precipitation of magnesium hydroxide. This will allow manganese to precipitate as manganese carbonate 59.1 and avoid the simultaneous precipitation of magnesium hydroxide. A portion of the carbonic species remains in solution after the sulphide removal step, so calcium carbonate 59.3 will be precipitated simultaneously. These will be recovered in a settling tank (not shown).

At the magnesium removal column 60 (also referred to as a magnesium precipitation reactor), effluent from the manganese removal column 58 is received via 51. More calcium hydroxide 57.3 is required in this column 60 to increase pH to above 10.73 causing magnesium hydroxide 61.1 and calcium carbonate 61.2 to precipitate from the magnesium removal column 60. The magnesium hydroxide 61.1 is fed to reactor 24 via 63.

The water in the magnesium removal column 60 still contains ammonia a residual COD and sulphide concentration. The pH in the magnesium removal column 60 is also high. As shown in Figure 1, this solution is recovered at 65 and transported to a pH neutralisation tank 64. Carbon dioxide 57.1 sourced from the calcining reaction at 49 is added into the pH neutralisation tank 64 to neutralise the pH. The remaining solution in the pH neutralisation tank 64 is transported to a settling tank 32. The sulphide that remains in the solution at this point is then removed by the addition of iron hydroxide 27.1 in the settling tank 32 to precipitate the sulphide as iron sulphide 33. A flocculent 80 will be added to aid settling in the settling tank 32. This iron sulphide 33 as well as the iron sulphide at 17 precipitated from the reaction clarifying settling tank 70 will then be oxidized biologically in a single aerated biological ferrous iron oxidising reactor, termed the biological iron oxidation reactor 22 containing solid growth media at pH 2. As shown, this iron sulphide 33 is transported to the biological iron oxidation reactor via 34.

At reactor 24 magnesium hydroxide (Mg(OH)₂) 61.1 is added into the liquid stream received from the biological iron oxidation reactor 22 and the pH is increased to 4, causing all the iron to precipitate whilst all the magnesium remains in solution as magnesium sulphate (MgSO₄). The resulting iron solids and magnesium sulphate solution from reactor 24 are transported to 26 via 25. At 26, the solids are separated from the solution, which produces iron hydroxide 27.1 and magnesium sulphate 27.2 in solution.

The soluble magnesium suphate 27.2 is then transported to 30 where the magnesium sulphate 27.2 is recovered as magnesium sulphate solids 31.1 by means of either evaporation or eutectic freeze crystallisation in 30. This process yields clean water at 31.2.

The iron hydroxide 27.1 produced at 26 is transported via line 28 to the settling tank 32 to produce iron sulphide 33, as described above. The iron sulphide 33 produced at the settling tank 32 is then fed back to the biological iron oxidation reactor 22 via 34, as described above.

The output from the settling tank 32 is then treated in a trickling filter 36. Air is also introduced to the trickling filer 36 at 37. Thereafter the treated solution is transported from the trickling filter 36 to a reverse osmosis filter 38 to render clean water at 40 and brine 41. The clean water 40 is combined with clean water 31.2 from process 30 to be discharged at 100.

In summary, the process 10 to treat wastewater is as follows:
Wastewater 11 with a high acidity (around pH 3.5-3.7) is received at 12 into the neutralisation and metal sulphide contact tank 14 where iron and acidity is neutralized (to about 6.3). After clarification with flocculent 72 at 70, the effluent moves to the biological sulphate reducing reactor 18. In the reactor 18 a carbon source 13 is added at 16, sulphide and bicarbonate alkalinity are produced and there is residual organic material and ammonia in solution. At 19 the surplus sludge is removed for disposal at 200. At the two-step process reactor 44, calcium is removed as calcium carbonate47, elemental sulphur 46 is produced and alkalinity (not specifically shown) is produced. At the manganese removal column 58, calcium hydroxide 57.3 from the calcination 49 of calcium carbonate 47 recovered from the two-step process reactor 44 is added to the solution to remove manganese as manganese carbonate 59.1. Calcium carbonate 59.2 is also precipitated. At the magnesium removal column 60 the same calcium hydroxide 57.3 is added to the solution, and magnesium hydroxide 61.1 and calcium carbonate 61.2 are recovered. At the pH neutralisation tank 64 the pH is further neutralized by addition of carbon dioxide 57.1. At the settling tank 32, iron sulphide 33 is removed and used at the biological iron oxidation reactor 22 to produce ferric sulphate and magnesium sulphate and at 28, iron hydroxide 27.1 is withdrawn. water at 40 and brine 41. The clean water 40 is combined with clean water 31.2 from process 30 to be discharged at 100.

In summary, the process 10 to treat wastewater is as follows:
Wastewater 11 with a high acidity (around pH 3.5-3.7) is received at 12 into the neutralisation and metal sulphide contact tank 14 where iron and acidity is neutralized (to about 6.3). After clarification with flocculent 72 at 70, the effluent moves to the biological sulphate reducing reactor 18. In the reactor 18 a carbon source 13 is added at 16, sulphide and bicarbonate alkalinity are produced and there is residual organic material and ammonia in solution. At 19 the surplus sludge is removed for disposal at 200. At the two-step process reactor 44, calcium is removed as calcium carbonate 47, elemental sulphur 46 is produced and alkalinity (not specifically shown) is produced. At the manganese removal column 58, calcium hydroxide 57.3 from the calcination 49 of calcium carbonate 47 recovered from the two-step process reactor 44 is added to the solution to remove manganese as manganese carbonate 59.1. Calcium carbonate 59.2 is also precipitated. At the magnesium removal column 60 the same calcium hydroxide 57.3 is added to the solution, and magnesium hydroxide 61.1 and calcium carbonate 61.2 are recovered. At the pH neutralisation tank 64 the pH is further neutralized by addition of carbon dioxide 57.1. At the settling tank 32, iron sulphide 33 is removed and used at the biological iron oxidation reactor 22 to produce ferric sulphate and magnesium sulphate and at 28, iron hydroxide 27.1 is withdrawn.

The manner that sulphide is removed from the solution and the fact that the feed water can be neutralized and all the calcium can be removed using only biogenically produced alkalinity in the form of bicarbonate alkalinity and hydroxyl ions, without the need to introduce additional lime from an external source is believed to be of substantial benefit in the field of wastewater treatment.

## Claims

1. A process (10) for treating sulphate containing effluent, which includes
(I) reducing sulphate contained in said sulphate containing effluent to sulphide in a biological sulphate reducing reactor (18), wherein sulphate is reduced to sulphide through sulphate reducing bacteria;
(ii) receiving the effluent from the biological sulphate reducing reactor (18) into a two-phase fluidised bed reactor (44) containing limestone particles and low density plastic floating media;
precipitating calcium carbonate (56) from the received effluent on the limestone particles in the two-phase fluidised bed reactor (44);
aerating (48) the received effluent in the two-phase fluidised bed reactor (44) to remove CO₂ produced in the biological sulphate reducing process, thereby to increase the pH of the received effluent in the two-phase fluidised bed reactor;
producing elemental sulphur (52) on the plastic floating media through biological sulphide oxidation of the received effluent by sulphide oxidizing bacteria on the low density plastic floating media;
recycling, within the fluidised bed reactor, the contents of the fluidised bed reactor at a sufficient rate to effect abrasion, wherein recycling removes elemental sulphur from the plastic floating media;
recycling, within the two-phase fluidised bed reactor, hydroxyl ions produced by the sulphide oxidation process, wherein recycling hydroxyl ions produced by the sulphide oxidation process comprises further increasing the pH of the solution and increasing the pH of the solution comprises enhancing calcium carbonate precipitation (56), and
(iii) harvesting the elemental sulphur from below the low density plastic floating media in a top portion of the two-phase fluidised bed reactor.

2. The process as claimed in claim 1, in which the step (i) of reducing sulphate contained in a sulphate containing effluent to sulphide in a biological sulphate reducing reactor (18) more specifically includes adding an organic carbon source (16) as an electron donor in the biological sulphate reducing reactor (18) to produce hydrogen sulphide and bicarbonate.

3. The process as claimed in claim 1, which includes the prior steps of:
receiving a feed water effluent (12) containing sulphate into a neutralisation and metal sulphide-containing reactor (14) in which iron sulphide (FeS) is precipitated (15);
feeding the precipitated iron sulphide (15) into a biological iron oxidation reactor (22); and
oxidizing the ferrous metal to ferric metal at a pH of about 2.

4. The process as claimed in claim 3, which includes withdrawing effluent from the biological iron oxidation reactor (22) and adding magnesium hydroxide (63) to the effluent to produce solid iron hydroxide and dissolved magnesium sulphate in solution, followed by separation (26) of the solid iron hydroxide (28).

5. The process as claimed in claim 4, which further includes the removal of dissolved magnesium sulphate from the effluent by means of any one of evaporation and eutectic freeze(30) to produce magnesium sulphate crystals.

6. The process as claimed in claim 1, which includes the further step of passing the effluent from the two-phase fluidised bed reactor to a manganese precipitation reactor (58) and controlling the pH in the manganese precipitation reactor (58) to about 9.7 to permit precipitation of manganese carbonate and calcium carbonate from the effluent.

7. The process as claimed in claim 6, which includes the further step of passing the effluent from the manganese precipitation reactor (58) to a magnesium precipitation reactor (60) and controlling the pH in the magnesium precipitation reactor (60) to above 10.73 to permit precipitation of magnesium hydroxide and calcium carbonate from the effluent.

8. The process of claim 7 which includes the further step of adding carbon dioxide sourced from the calcining reaction at (57) to the effluent of the magnesium precipitation reactor (60).

9. The process as claimed in claim 8, which includes the further step of feeding the effluent of the magnesium precipitation reactor (60) to an iron precipitation reactor (32) and adding iron hydroxide (28) to the effluent, permitting further sulphide precipitation as iron sulphide (34).

10. The process as claimed in claim 9, which includes the further step of feeding the effluent from the iron precipitation reactor (32) to a biological effluent treatment process in the form of a trickling filter (36) followed by a reverse osmosis membrane reactor (38).

## Patentansprüche

1. Verfahren (1) zur Aufbereitung von sulfathaltigem Abwasser, umfassend
(i) das Reduzieren des im besagten sulfathaltigen Abwasser enthaltenen Sulfats zu Sulfid in einem biologischen sulfatreduzierenden Reaktor (18), wobei das Sulfat von sulfatreduzierenden Bakterien zu Sulfid reduziert wird;
(ii) die Aufnahme des Abwassers aus dem biologischen sulfatreduzierenden Reaktor (18) in einem Zweiphasen-Wirbelschichtreaktor (44), der Kalkpartikel und plastische Schwimmmedien geringer Dichte enthält;
das Ausfällen von Calciumcarbonat (56) aus dem aufgenommenen Abwasser auf den Kalkpartikeln im Zweiphasen-Wirbelschichtreaktor (44);
das Belüften (48) des aufgenommenen Abwassers im Zweiphasen-Wirbelschichtreaktor (44) zum Entfernen des im biologischen Sulfatreduzierprozess entstandenen CO₂, um dadurch den pH-Wert des aufgenommenen Abwassers im Zweiphasen-Wirbelschichtreaktor zu erhöhen;
das Herstellen von elementarem Schwefel (52) auf den plastische Schwimmmedien durch biologische Sulfidoxidation des aufgenommenen Abwassers durch sulfidoxidierende Bakterien auf den plastischen Schwimmmedien geringer Dichte;
das Recyclen des Inhalts des Wirbelschichtreaktors im Wirbelschichtreaktor mit einer zur Abrasion ausreichenden Geschwindigkeit, wobei das Recyclen den elementare Schwefel aus den plastischen Schwimmmedien entfernt;
das Recyclen von im Sulfidoxidationsprozess entstandenen Hydroxylionen im Zweiphasen-Wirbelschichtreaktor, wobei das Recyclen von im Sulfidoxidationsprozess entstandenen Hydroxylionen die weitere Erhöhung des pH-Werts der Lösung umfasst und die Erhöhung des pH-Werts der Lösung die Steigerung der Calciumcarbonat-Ausfällung (56) umfasst, und
(iii) das Sammeln des elementaren Schwefels von unterhalb der plastischen Schwimmmedien geringer Dichte in einem oberen Teil des Zweiphasen-Wirbelschichtreaktors.

2. Verfahren nach Anspruch 1, in dem der Schritt (i) des Reduzierens des in einem sulfathaltigen Abwasser enthaltenen Sulfats zu Sulfid in einem biologischen sulfatreduzierenden Reaktor (18) im Besonderen das Hinzufügen einer organischen Kohlenstoffquelle (16) als Elektronendonator im biologischen sulfatreduzierenden Reaktor (18) zur Erzeugung von Wasserstoffsulfid und Bicarbonat umfasst.

3. Verfahren nach Anspruch 1, umfassend die folgenden vorausgehenden Schritte:
die Aufnahme von sulfathaltigem Speiseabwasser (12) in einem metallsulfidhaltigen Neutralisationsreaktor (14), in dem Eisensulfid (FeS) ausgefällt wird:
das Einspeisen des ausgefällten Eisensulfids (15) in einem biologischen Eisenoxidationsreaktor (22); und
das Oxidieren des Eisenmetalls zu einem dreiwertigen Eisenmetall bei einem pH-Wert von ca. 2.

4. Verfahren nach Anspruch 3, umfassend die Entnahme des Abwassers aus dem biologischen Eisenoxidationsreaktor (22) und die Zugabe von Magnesiumhydroxid (63) zum Abwasser zur Herstellung von festem Eisenhydroxid und aufgelöstem Magnesiumsulfat in Lösung, gefolgt vom Abscheiden (26) des festen Eisenhydroxids (28).

5. Verfahren nach Anspruch 4, weiter umfassend die Entnahme des aufgelösten Magnesiumsulfats aus dem Abwasser durch Verdampfen oder eutektisches Gefrieren (30) zur Herstellung von Magnesiumsulfatkristallen.

6. Verfahren nach Anspruch 1, umfassend den weiteren Schritt des Weiterleitens des Abwassers aus dem Zweiphasen-Wirbelschichtreaktor zu einem Manganausfällreaktor (58) und das Einregeln des pH-Werts im Manganausfällreaktor (58) auf ca. 9,7 zur Ermöglichung des Ausfällens von Mangancarbonat und Calciumcarbonat aus dem Abwasser.

7. Verfahren nach Anspruch 6, umfassend den weiteren Schritt des Weiterleitens des Abwassers aus dem Manganausfällreaktor (58) zu einem Magnesiumausfällreaktor (60) und das Einregeln des pH-Werts im Magnesiumausfällreaktor (60) auf über 10,73 zur Ermöglichung des Ausfällens von Magnesiumhydroxid und Calciumcarbonat aus dem Abwasser.

8. Verfahren nach Anspruch 7, umfassend den weiteren Schritt des Hinzufügens von aus der Kalzinierreaktion bei (57) beschaffenem Kohlenstoffdioxid zum Abwasser des Magnesiumausfällreaktors (60).

9. Verfahren nach Anspruch 8, umfassend den weiteren Schritt des Einspeisens des Abwassers des Magnesiumausfällreaktors (60) in einen Eisenausfällreaktor (32) und das Hinzufügen von Eisenhydroxid (28) zum Abwasser, was weitere Sulfidausfällung als Eisensulfid (34) ermöglicht.

10. Verfahren nach Anspruch 9, umfassend den weiteren Schritt des Einspeisens des Abwassers aus dem Eisenausfällreaktor (32) in ein biologisches Abwasseraufbereitungsverfahren in der Form eines Tropfkörpers (36), gefolgt von einem Umkehrosmosemembranreaktor (38).

## Revendications

1. Procédé (10) de traitement d'effluent contenant du sulfate, qui inclut
(i) réduire le sulfate contenu dans ledit effluent contenant du sulfate en sulfure dans un réacteur sulfato-réducteur biologique (18), dans lequel le sulfate est réduit en sulfure par des bactéries sulfato-réductrices ;
(ii) recevoir l'effluent du réacteur sulfato-réducteur biologique (18) dans un réacteur à lit fluidisé biphasique (44) contenant des particules de calcaire et des milieux flottants en plastique à faible densité ;
précipiter le carbonate de calcium (56) provenant de l'effluent reçu sur les particules de calcaire dans le réacteur à lit fluidisé biphasique (44) ;
aérer (48) l'effluent reçu dans le réacteur à lit fluidisé biphasique (44) pour éliminer le CO₂ produit dans le processus de sulfato-réduction biologique, pour augmenter de ce fait le pH de l'effluent reçu dans le réacteur à lit fluidisé biphasique ;
produire du soufre élémentaire (52) sur les milieux flottants en plastique par sulfo-oxydation biologique de l'effluent reçu par des bactéries sulfo-oxydantes sur les milieux flottants en plastique à faible densité ;
recycler, au sein du réacteur à lit fluidisé, le contenu du réacteur à lit fluidisé à une vitesse suffisante pour entraîner l'abrasion, dans lequel le recyclage élimine le soufre élémentaire des milieux flottants en plastique ;
recycler, au sein du réacteur à lit fluidisé biphasique, des ions hydroxyle produits par le processus de sulfo-oxydation, dans lequel le recyclage d'ions hydroxyle produits par le processus de sulfo-oxydation comprend augmenter davantage le pH de la solution et augmenter le pH de la solution comprend amplifier la précipitation de carbonate de calcium (56), et
(iii) récolter le soufre élémentaire d'en dessous des milieux flottants en plastique à faible densité dans une portion supérieure du réacteur à lit fluidisé biphasique.

2. Procédé selon la revendication 1, dans lequel l'étape (i) de réduction du sulfate contenu dans un effluent contenant du sulfate en sulfure dans un réacteur de sulfato-réduction biologique (18) inclut plus spécifiquement ajouter une source de carbone organique (16) en tant que donneur d'électrons dans le réacteur de sulfato-réduction biologique (18) pour produire du sulfure d'hydrogène et du bicarbonate.

3. Procédé selon la revendication 1, qui inclut les étapes antérieures consistant à :
recevoir un effluent d'eau d'alimentation (12) contenant du sulfate dans un réacteur de neutralisation et contenant du sulfure métallique (14) dans lequel du sulfure de fer (FeS) est précipité (15) ;
alimenter le sulfure de fer précipité (15) dans un réacteur d'oxydation de fer biologique (22) ; et
oxyder le métal ferreux en métal ferrique à un pH d'environ 2.

4. Procédé selon la revendication 3, qui inclut retirer l'effluent du réacteur d'oxydation de fer biologique (22) et ajouter de l'hydroxyde de magnésium (63) à l'effluent pour produire de l'hydroxyde de fer solide et du sulfate de magnésium dissous en solution, suivi de la séparation (26) de l'hydroxyde de fer solide (28).

5. Procédé selon la revendication 4, qui inclut en outre l'élimination du sulfate de magnésium dissous de l'effluent au moyen de l'un quelconque des procédés d'évaporation et de congélation eutectique (30) pour produire des cristaux de sulfate de magnésium.

6. Procédé selon la revendication 1, qui inclut l'étape supplémentaire consistant à faire passer l'effluent du réacteur à lit fluidisé biphasique à un réacteur de précipitation de manganèse (58) et commander le pH dans le réacteur de précipitation de manganèse (58) à environ 9,7 pour permettre la précipitation de carbonate de manganèse et de carbonate de calcium de l'effluent.

7. Procédé selon la revendication 6, qui inclut l'étape supplémentaire consistant à faire passer l'effluent du réacteur de précipitation de manganèse (58) à un réacteur de précipitation de magnésium (60) et commander le pH dans le réacteur de précipitation de magnésium (60) à plus de 10,73 pour permettre la précipitation d'hydroxyde de magnésium et de carbonate de calcium de l'effluent.

8. Procédé selon la revendication 7, qui inclut l'étape supplémentaire consistant à ajouter du dioxyde de carbone sourcé à partir de la réaction de calcination à (57) à l'effluent du réacteur de précipitation de magnésium (60).

9. Procédé selon la revendication 8, qui inclut l'étape supplémentaire consistant à alimenter l'effluent du réacteur de précipitation de magnésium (60) à un réacteur de précipitation de fer (32) et ajouter de l'hydroxyde de fer (28) à l'effluent, permettant en outre la précipitation de sulfure en tant que sulfure de fer (34).

10. Procédé selon la revendication 9, qui inclut l'étape supplémentaire consistant à alimenter l'effluent du réacteur de précipitation de fer (32) à un processus de traitement d'effluent biologique sous la forme d'un lit bactérien (36) suivi d'un réacteur à membrane à osmose inverse (38).
